# EUROPÄISCHE PATENTSCHRIFT

(11) **EP 2 100 350 B1**
(45) Veröffentlichungstag und Bekanntmachung des Hinweises auf die Patenterteilung: **01.01.2014**
(21) Anmeldenummer: 07821559.7
(22) Anmeldetag: 19.10.2007
(51) Int. Cl.: H02B 1/20

(54) **STROMSCHIENENPAKET**
BUSBAR PACK
EMPILAGE DE RAILS CONDUCTEURS

(30) Priorität: 11.12.2006 DE 102006058327
(43) Veröffentlichungstag der Anmeldung: 16.09.2009
(73) Patentinhaber: Siemens Aktiengesellschaft, 80333 München (DE)
(72) Erfinder: HIRSCHFELD, Thomas, 90559 Burgthann (DE)
(86) Internationale Anmeldenummer: PCT/EP2007/061195
(87) Internationale Veröffentlichungsnummer: WO 2008/071493

(56) Entgegenhaltungen:
- US-A- 3 995 103
- US-A- 5 166 861

## Beschreibung

Die Erfindung bezieht sich auf ein Stromschienenpaket mit n Stromschienen und wenigstens n-1 Isolierschienen, die diese Stromschienen flächenmäßig überragen, wobei jeweils eine Isolierschiene zwischen zwei Stromschienen angeordnet ist.

Das Dokument US3995103 offenbart ein Stromschienenpaket mit relativ dünnen, voneinander elektrisch isolierten Stromschienen. Diese sind in einer Sandwichbauweise angeordnet. Sowohl die Stromschienen als auch die Isolierung weisen Öffnungen auf, die jeweils übereinander liegen.

In den im Handel erhältlichen Umrichtergeräten sind bereits Stromschienenpakete untergebracht. Bei diesen Stromschienenpaketen werden bis zu drei Stromschienen, insbesondere dünnflächige Stromschienen, durch Isolierschienen, beispielsweise Kunststoffschienen, voneinander räumlich getrennt. Diese sieben Schienen werden mittels Vorrichtungen, beispielsweise Schrauben, zu einem Paket zusammengefasst. Dieses Stromschienenpaket ist vorteilhafterweise an einen luftigen bzw. belüfteten Einbauplatz im Umrichtergerät untergebracht und verschaltet. Wird aus Platzknappheit im Innern des Umrichtergerätes dieses Stromschienenpaket mit anderen Komponenten des Umrichters umbaut, so kann dieses Stromschienenpaket nicht oder nicht ausreichend durch Luftkonvektion gekühlt werden. Dadurch werden die Teile des Stromschienenpaketes, beispielsweise die Isolierschienen und die Schrauben, thermisch hoch bzw. überbelastet, so dass das Stromschienenpaket infolge zu hoher thermischer Belastung versagen könnte. Dieser Nachteil könnte durch die Verwendung hochtemperaturfester Teile aus isolierendem Material behoben werden, die jedoch aus Kostengründen nicht verwendet werden.

Der Erfindung liegt nun die Aufgabe zugrunde, das bekannte Stromschienenpaket derart weiterzubilden, dass die Stromschienen ausreichend belüftet werden.

Diese Aufgabe wird erfindungsgemäß mit den kennzeichnenden Merkmalen des Anspruchs 1 gelöst.

Dadurch, dass wenigstens einer inneren Stromschiene des Stromschienenpaketes beidseitig eine netzförmige Schiene zugeordnet ist, und diese Stromschiene jeweils mit einer Anzahl von Durchbrüchen versehen ist, wobei diese korrespondierend zu Querstegen korrespondierender netzförmiger Schienen angeordnet sind, kann mittels Konvektion kühlende Luft entlang jeder Stromschiene beidseitig strömen.

Wie gut die Kühlung wenigstens der inneren Stromschiene des Stromschienenpaketes ausfällt, hängt von der Ausgestaltung der netzförmigen Schiene und damit auch von der Ausgestaltung und der Platzierung der Durchbrüche in dieser Stromschiene ab.

Entsprechend dem Merkmal des Anspruchs 2 sind die Querstege einer jeden netzförmigen Schiene fluchtend zueinander angeordnet. Dadurch sind die korrespondierenden Durchbrüche einer korrespondierenden Stromschiene ebenfalls in einer Reihe über die Breite der Stromschiene nebeneinander angeordnet. Weist die netzförmige Schiene über die Breite einer Stromschiene mehrere Längsstege auf, die untereinander mittels der Querstege miteinander verknüpft sind, so weisen die Durchbrüche quadratische Querschnitte auf.

Um wenigstens die innere Stromschiene des Stromschienenpaketes kühlen zu können, sind über die gesamte Länge dieser Stromschiene mehrere Gruppen von fluchtenden Durchbrüchen in dieser Stromschiene eingebracht.

Wären die Querstege einer Gruppe von Querstegen entsprechend dem Anspruch 3 stufenförmig zueinander angeordnet, so können die Durchbrüche größer dimensioniert werden. Dadurch weisen die Durchbrüche jeweils rechteckförmige Querschnitte auf. Durch die Stufung der Querstege erhöht sich der Luftdurchsatz des Stromschienenpaketes, ohne dass der Querschnitt wenigstens der inneren Stromschiene des Stromschienenpaketes zu stark beeinträchtigt wird.

Um die Herstellung der zahlreichen Durchbrüche wenigstens einer inneren Stromschiene des Stromschienenpaketes zu vereinfachen, sind diese Durchbrüche kreisförmig ausgebildet. Dadurch entstehen diese Durchbrüche durch Bohren und nicht mehr durch Stanzen.

Unabhängig von der Funktion der beiden netzförmigen Schienen wenigstens einer inneren Stromschiene des Stromschienenpaketes können diese netzförmigen Schienen aus elektrisch isolierendem oder elektrisch leitendem Material bestehen. Sind diese aus elektrisch leitendem Material, so kann ein Teil des Stromes dieser inneren Stromschiene auch über die netzförmige Schiene fließen. Dadurch wird diese innere Stromschiene geringer thermisch belastet.

Um die Schienen des erfindungsgemäßen Stromschienenpaketes nicht zusätzlich mit Bohrungen für Vorrichtungen zur Verbindung der Schienen zu einem Paket zu schwächen, werden jeweils als Vorrichtung zwei U-förmige Verschlussbügel vorgesehen. Mittels diesen U-förmigen Verschlussbügeln der zweiteiligen Vorrichtung werden die Schienen nicht nur zu einem Stapel zusammengehalten, sondern die Isolierschienen, die die Stromschienen flächenmäßig überragen, werden dadurch zueinander fixiert. Die Anzahl dieser verwendeten zweiteiligen Vorrichtungen hängt von der Länge des Stromschienenpaketes ab.

Zur weiteren Erläuterung der Erfindung wird auf die Zeichnung Bezug genommen, in der eine Ausführungsform eines erfindungsgemäßen Stromschienenpaketes schematisch veranschaulicht ist.
- FIG 1: zeigt eine Explosionsdarstellung eines vorteilhaften Schienenpakets nach der Erfindung, in der
- FIG 2: ist ein erfindungsgemäßes Stromschienenpaket gemäß FIG 1 in montiertem Zustand dargestellt, und in der
- FIG 3: ist der markierte Ausschnitt der FIG 2 vergrößert dargestellt.

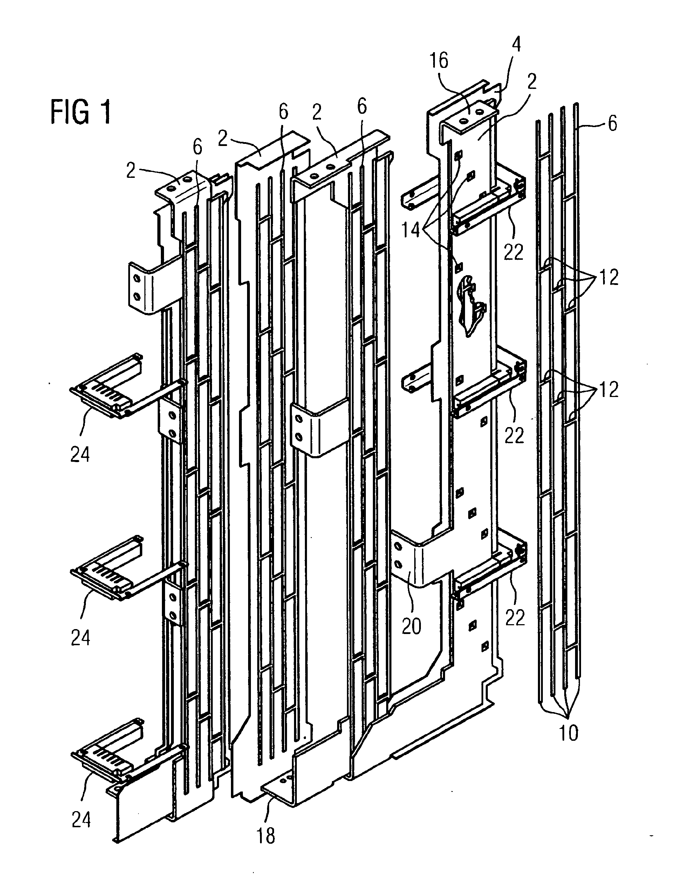

In der FIG 1 sind mit 2 eine Stromschiene, mit 4 eine Isolierschiene, mit 6 eine netzförmige Schiene und mit 8 eine zweiteilige Vorrichtung bezeichnet. Wie dieser Darstellung zu entnehmen ist, ist jede netzförmige Schiene 6 auf eine Flachseite einer jeden Stromschiene 2 angeordnet. D.h., jede Stromschiene 2 ist beidseitig mit netzförmigen Schienen 6 versehen. Um den Aufwand für die Kühlung des Stromschienenpaketes möglichst gering zu halten, reicht es aus, wenn nur eine innere Stromschiene 2 des Stromschienenpaktes beidseitig mit netzförmigen Schienen 6 versehen wird. Das heißt, bei einem dreiphasigen Stromschienenpaket wird nur die innere Stromschiene 2 dieses Stromschienenpaktes mit den zusätzlichen netzförmigen Schienen 6 versehen. Die dargestellten netzförmigen Schienen 6 weisen in dieser Darstellung vier Längsstege 10 und fünfzehn Querstege 12 auf. Mittels dieser Querstege 12 werden die Längsstege 10 miteinander beabstandet verbunden. Jeweils drei Querstege 12 bilden bei vier Längsstegen 10 eine Gruppe. Über der Länge der Stromschiene 2 sind in dieser Darstellung fünf Gruppen von Querstegen 12 dargestellt. Diese Zusammenschaltung von Gruppen von Querstegen 12 und Längsstegen 10 gemäß der Darstellung bilden eine netzförmig ausgebildete Schiene.

In der Darstellung gemäß FIG 1 ist ebenfalls erkennbar, dass die Stromschienen 2 jeweils eine Vielzahl von Durchbrüchen 14 aufweisen. Diese Durchbrüche 14 sind zu den Querstegen 12 der hier zugeordneten beiden netzförmigen Schienen 6 korrespondierend angeordnet. Damit die Luft zwischen zwei Längsstegen 14 entlang der Stromschiene 2 aufsteigen kann, müssen deren Durchbrüche 14 so groß sein, dass die aufsteigende Luft die Querstege 12 mittels der Durchbrüche 14 umströmen kann. Dadurch bilden jeweils zwei nebeneinander angeordnete Längsstege 10 einer netzförmigen Schiene 6 in Verbindung mit einer korrespondierenden Isolierschiene 4 einen Kühlkanal, in dem die kühlende Luft in Verbindung mit den Durchbrüchen 14 der zugehörigen Stromschiene 2 aufsteigen kann.

In der Darstellung gemäß FIG 1 bilden die netzförmig angeordneten Längs- und Querstege 10 und 12 einer netzförmigen Schiene 6 drei nebeneinander verlaufende Kühlkanäle. An jeder Stelle eines Quersteges 12, an dem der Kühlkanal unterbrochen ist, wird mittels des korrespondierenden Durchbruches 14 in einer zugehörigen Stromschiene 2 dieser Quersteg 12 kühlmittelmäßig überbrückt. Die Isolierschiene 4, die in einem bekannten Stromschienenpaket direkt auf einer Flachseite einer Stromschiene 2 aufliegt, liegt im Stromschienenpaket gemäß der Erfindung auf der auf der Stromschiene 2 aufliegenden netzförmigen Schiene 6. Dadurch werden die von der netzförmigen Schiene 6 gebildeten Kühlkanäle abgedeckt. Dadurch kann eine zu kühlende Luft mittels Konvektion nur entlang der Flachseite einer Stromschiene 2 fließen.

Der Darstellung gemäß FIG 1 ist außerdem zu entnehmen, dass jede Stromschiene 2 stirnseitig einen oberen und einen unteren abgewinkelten Bereich 16 und 18 aufweisen. Außerdem weist jede Stromschiene 2 schmalseitig ebenfalls einen abgewinkelten Bereich 20 auf. Die Bereiche 16 und 18 bilden jeweils einen netzseitigen Anschluss, wogegen der Bereich 20 einen lastseitigen Anschluss bildet.

Ferner sind dieser Explosionsdarstellung ebenfalls mehrere zweiteilige Vorrichtungen 8 zu entnehmen. Jede zweiteilige Vorrichtung 8 weist zwei U-förmige Verschlussbügel 22 und 24 auf. Die Verbindungsstege der U-förmigen Verschlussbügel 22, 24 einer jeden Vorrichtung 8 weisen Nuten auf. Diese Nuten sind derart bemessen, dass die einer Stromschiene 2 überstehenden Bereiche der Isolierschiene 4 gesteckt werden können. Dieser einer Stromschiene 2 überstehende Bereich einer Isolierschiene 4 ist derart ausgebildet, dass die Erfordernisse an Luft- und Kriechstrecken erfüllt werden. Mittels der Nuten in den Verbindungsstegen der U-förmigen Verschlussbügel 22, 24 einer jeden zweiteiligen Vorrichtung 8 sind die Isolierschienen 4 entlang des Stromschienenpaketes in ihrer Lage fixiert. Außerdem weist ein Schenkel eines jeden U-förmigen Verschlussbügels 22, 24 eine entlang des Schenkels verlaufende Nut oder eine entlang des Schenkels verlaufende Nase auf. Diese Nut und Nase sind derart bemessen, dass diese Nase mit der Nut verklemmbar ist. Bei der Montage der Schienen 2, 4, 6 des Stromschienenpaketes zu einem Schienenpaket, werden jeweils die beiden U-förmigen Verschlussbügel 22, 24 einer jeden zweiteiligen Vorrichtung 8 jeweils auf einer Schmalseite des Schienenpakets aufgeschoben. Dabei greifen diese Schenkel der beiden U-förmigen Verschlussbügel 22, 24 einer zweiteiligen Vorrichtung 8 derart ineinander, dass die Nase eines Schenkels des einen U-förmigen Verschlussbügels 22 in die Nut eines Schenkels des anderen U-förmigen Verschlussbügels 24 einer zweiteiligen Vorrichtung 8 eingreift. Dadurch wird das Stromschienenpaket spielfrei verklemmt. In der Endposition dieser beiden U-förmigen Verschlussbügel 22 und 24 einer zweiteiligen Vorrichtung 8 verrasten diese, oder werden miteinander verschraubt.

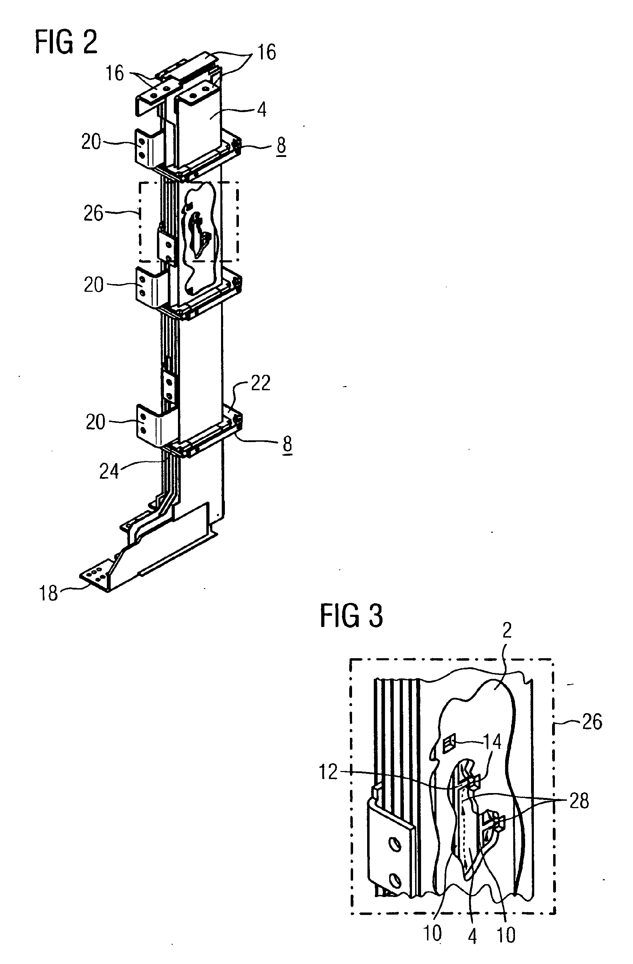

In der FIG 2 ist ein zusammengebautes Stromschienenpaket nach der Erfindung dargestellt. In dieser Darstellung sind die verschlossenen Vorrichtungen 8 dargestellt, die jeweils aus zwei ineinander geschobene U-förmige Verschlussbügel 22 und 24 bestehen. Außerdem ist in dieser Figur ein Bereich mit 26 markiert, der in der FIG 3 vergrößert dargestellt ist.

In der vergrößerten Darstellung des Bereichs 26 des Stromrichterpakets nach FIG 2 sind die Strömungswege 28 einer Kühlluft zweier nebeneinander angeordneter Kühlkanäle dargestellt. In dieser Darstellung sind ein Teil der Stromschiene 2 mit drei stufenförmig zueinander versetzt angeordneten Durchbrüchen 14, zwei Längsstege 10 und zwei Querstege 12 einer netzförmigen Schiene 6 und eine Isolierschiene 4 erkennbar. In dieser Darstellung sind die kühlmittelmäßigen Überbrückungen der Querstege 12 durch die Kühlluft erkennbar.

Durch die Hinzufügung von jeweils zwei netzförmigen Schienen 6 zu einer Stromschiene 2 und durch die Einbringung von Durchbrüchen 14 in diese Stromschiene 2 an Stellen, die zu den Querstegen 12 der beiden beidseitig angebrachten netzförmigen Schienen 6 korrespondieren, wird erreicht, dass die Stromschiene 2 innerhalb eines Stromschienenpaketes durch Konvektion ausreichend gekühlt wird. Dieses erfindungsgemäße Stromschienenpaket ist unwesentlich breiter als ein handelsübliches Stromschienenpaket. Außerdem kann diese Stromschienenkühlung sehr kostengünstig hergestellt werden.

## Patentansprüche

1. Stromschienenpaket mit n Stromschienen (2) und wenigstens n-1 Isolierschienen (4), die diese Stromschienen (2) flächenmäßig überragen, wobei jeweils eine Isolierschiene (4) zwischen zwei Stromschienen (2) angeordnet ist, wobei dieser Stapel von Schienen (2, 4) mittels Vorrichtungen in ihrer Lage zueinander fixiert sind, wobei wenigstens eine innere Stromschiene (2) des Stromschienenpaketes beidseitig mit einer netzförmigen Schiene (6) versehen ist, und wobei diese Stromschiene (2) mit Durchbrüchen (14) versehen ist, die korrespondierend zu Querstegen (12) der korrespondierenden netzförmigen Schiene (6) angeordnet sind, und wobei die Durchbrüche (14) derart ausgebildet sind, dass eine aufsteigende Luft die Querstege (12) mittels der Durchbrüche (14) umströmen kann.

2. Stromschienenpaket nach Anspruch 1, **dadurch gekennzeichnet, dass** jede Stromschiene (2) dieses Stromschienenpaketes jeweils beidseitig mit einer netzförmigen Schiene (6) versehen ist.

3. Stromschienenpaket nach Anspruch 1 oder 2, **dadurch gekennzeichnet, dass** die Querstege (12) über die Breite einer Stromschiene (2) einer jeden netzförmigen Schiene (6) fluchtend zueinander angeordnet sind.

4. Stromschienenpaket nach Anspruch 1 oder 2, **dadurch gekennzeichnet, dass** die Querstege (12) über die Breite einer Stromschiene (2) einer jeden netzförmigen Schiene (6) stufenförmig angeordnet sind.

5. Stromschienenpaket nach einem der vorgenannten Ansprüche, **dadurch gekennzeichnet, dass** die Durchbrüche (14) einer jeden Stromschiene (2) rechteckförmig ausgebildet sind.

6. Stromschienenpaket nach einem der Ansprüche 1 bis 4, **dadurch gekennzeichnet, dass** die Durchbrüche (14) einer jeden Stromschiene (2) quadratförmig ausgebildet sind.

7. Stromschienenpaket nach einem der Ansprüche 1 bis 4, **dadurch gekennzeichnet, dass** die Durchbrüche (14) kreisförmig ausgebildet sind.

8. Stromschienenpaket nach einem der vorgenannten Ansprüche, **dadurch gekennzeichnet, dass** die netzförmige Schiene (6) aus elektrisch isolierendem Material ist.

9. Stromschienenpaket nach einem der Ansprüche 1 bis 4, **dadurch gekennzeichnet, dass** die netzförmige Schiene (6) aus elektrisch leitendem Material ist.

10. Stromschienenpaket nach einem der vorgenannten Ansprüche, **dadurch gekennzeichnet, dass** jeweils als Vorrichtung zwei U-förmige Verschlussbügel (22, 24), vorgesehen sind.

## Claims

1. Busbar pack having n busbars (2) and at least n-1 isolating bars (4) which overhang the area of these busbars (2), with one isolating bar (4) in each case being arranged between two busbars (2), and with this stack of bars (2, 4) being fixed in their position with respect to one another by means of apparatuses, at least one inner busbar (2) of the busbar pack being provided with a bar (6) in the form of a mesh on both sides, and this busbar (2) being provided with apertures (14) which are arranged to correspond to transverse webs (12) of the corresponding bar (6) which is in the form of a mesh, and the apertures (14) being formed in such a way that rising air can flow around the transverse webs (12) by means of the apertures (14).

2. Busbar pack according to Claim 1, **characterized in that** each busbar (2) in this busbar pack is in each case provided with a bar (6) which is in the form of a mesh on both sides.

3. Busbar pack according to Claim 1 or 2, **characterized in that** the transverse webs (12) are arranged aligned with respect to one another over the width of a busbar (2) of each bar (6) which is in the form of a mesh.

4. Busbar pack according to Claim 1 or 2, **characterized in that** the transverse webs (12) are arranged in a stepped form over the width of a busbar (2) of each bar (6) which is in the form of a mesh.

5. Busbar pack according to one of the abovementioned claims, **characterized in that** the apertures (14) in each busbar (2) are rectangular.

6. Busbar pack according to one of Claims 1 to 4, **characterized in that** the apertures (14) in each busbar (2) are square.

7. Busbar pack according to one of Claims 1 to 4, **characterized in that** the apertures (14) are circular.

8. Busbar pack according to one of the abovementioned claims, **characterized in that** the bar (6) which is in the form of a mesh is composed of electrically insulating material.

9. Busbar pack according to one of Claims 1 to 4, **characterized in that** the bar (6) which is in the form of a mesh is composed of electrically conductive material.

10. Busbar pack according to one of the abovementioned claims, **characterized in that** two U-shaped fastening brackets (22, 24) are in each case provided as an apparatus.

## Revendications

1. Paquet de rails conducteurs ayant n rails ( 2 ) conducteurs et au moins n-1 rails ( 4 ) isolants, qui dépassent suivant une surface de ces rails ( 2 ) conducteurs, respectivement un rail ( 4 ) isolant étant disposé entre deux rails ( 2 ) conducteurs, cet empilement de rails ( 2, 4 ) étant immobilisés dans leur position les uns par rapport aux autres au moyen de dispositifs, au moins un rail ( 2 ) conducteur intérieur du paquet de rails conducteurs étant pourvu des deux côtés d'un rail ( 6 ) en forme de treillis et ce rail ( 2 ) conducteur étant pourvu de traversées ( 14 ) qui sont disposées en correspondance avec des traverses ( 12 ) des rails ( 6 ) correspondants en forme de treillis et les traversées ( 14 ) sont constituées de manière à ce que de l'air ascendant puisse passer autour des traverses ( 12 ) au moyen des traversées ( 14 ).

2. Paquet de rails conducteurs suivant la revendication 1, **caractérisé en ce que** chaque rail ( 2 ) conducteur de ce paquet de rails conducteurs est pourvu respectivement des deux côtés d'un rail ( 6 ) en forme de treillis.

3. Paquet de rails suivant la revendication 1 ou 2, **caractérisé en ce que** les traverses ( 12 ) d'un rail ( 6 ) en forme de treillis respectif sont disposées en étant alignées les unes par rapport aux autres sur la largeur d'un rail ( 2 ) conducteur.

4. Paquet de rails suivant la revendication 1 ou 2, **caractérisé en ce que** les traverses ( 12 ) d'un rail ( 6 ) en forme de treillis sont disposées en échelons sur la largeur d'un rail ( 2 ) conducteur.

5. Paquet de rails suivant l'une des revendications précédentes, **caractérisé en ce que** les traversées ( 14 ) d'un rail ( 2 ) conducteur sont rectangulaires.

6. Paquet de rails suivant l'une des revendications 1 à 4, **caractérisé en ce que** les traversées ( 14 ) d'un rail ( 2 ) conducteur sont carrées.

7. Paquet de rails suivant l'une des revendications 1 à 4, **caractérisé en ce que** les traversées ( 14 ) sont circulaires.

8. Paquet de rails suivant l'une des revendications précédentes, **caractérisé en ce que** le rail ( 6 ) en forme de treillis est en un matériau isolant du point de vue électrique.

9. Paquet de rails suivant l'une des revendications 1 à 4, **caractérisé en ce que** le rail ( 6 ) en forme de treillis est en un matériau conducteur de l'électricité.

10. Paquet de rails suivant l'une des revendications précédentes, **caractérisé en ce qu'**il est prévu respectivement comme dispositif deux étriers ( 22, 24 ) de fermeture en forme de U.
